# FASCICULE DE BREVET EUROPEEN

(11) **EP 1 061 324 B1**
(45) Date de publication et mention de la délivrance du brevet: **30.07.2003**
(21) Numéro de dépôt: 00401374.4
(22) Date de dépôt: 19.05.2000
(51) Int. Cl.: F41H 11/16, G01V 1/147

(54) **Dispositif et procédé de génération de signaux acoustiques et sismiques**
Verfahren und Vorrichtung zur Erzeugung akustischer und seismischer Signale
Method and device for the production of acoustic and seismic signals

(30) Priorité: 14.06.1999 FR 9907695
(43) Date de publication de la demande: 20.12.2000
(73) Titulaire: GIAT INDUSTRIES, 78000 Versailles (FR)
(72) Inventeur: Laine, Loic, 18230 Saint Doulchard (FR); Jouseau, Eric, 18000 Bourges (FR); Boffano, Crhistophe, 18000 Bourges (FR)
(74) Mandataire: Célanie, Christian

(56) Documents cités:
- WO-A-97/46848
- FR-A- 914 284
- US-A- 4 006 795

## Description

Le domaine technique de l'invention est celui des dispositifs pouvant engendrer des signaux acoustiques et sismiques. De tels générateurs sont utilisés notamment dans le domaine du déminage.

On connaît par le brevet US-5125317, qui est à la base du préambule de la revendication principale, un générateur sismique destiné à équiper un véhicule de déminage. Ce générateur comprend un moteur entraînant un disque présentant un balourd. Le balourd provoque des vibrations lors de la rotation du moteur. Le générateur est fixé à proximité d'un essieu du véhicule et les vibrations sont transmises au sol par l'intermédiaire de l'essieu.

Le principal inconvénient d'un tel dispositif est qu'il n'engendre qu'une seule fréquence vibratoire (système unimodal). Il n'est donc pas possible de simuler toute la bande de fréquences engendrée par un véhicule réel, sauf à combiner plusieurs générateurs ayant des fréquences différentes, ce qui est coûteux et pose des problèmes d'intégration dans le véhicule.

Un seul de ces systèmes ne permet pas de leurrer efficacement les mines antichar modernes qui sont dotées de capteurs sismiques capables d'analyser le signal vibratoire reçu.

De plus le rapport entre la puissance nécessaire à l'entraînement du moteur et celle des signaux sismiques/acoustiques obtenus est très faible, principalement en raison du passage nécessaire des signaux par l'intermédiaire du train du véhicule, qui ajoute par ailleurs un bruit parasite au signal initial. Le rendement d'un tel dispositif est donc faible.

On connaît également par le brevet FR2748560 un système de déminage permettant de déclencher les mines terrestres posées, enterrées ou disposées en bord de route. Ce système engendre un signal sismique par ses propres roues motrices qui sont dotées d'un relief approprié.

Ce système présente également des inconvénients. Tout d'abord la puissance du signal dépend du poids supporté par les roues, donc de la masse du véhicule porteur. Un tel dispositif ne peut être mis en oeuvre sur un petit véhicule téléopéré sans une forte perte d'efficacité. De plus le signal engendré est là encore unimodal et il dépend de la vitesse de déplacement du véhicule, aucun signal ne pouvant être engendré à l'arrêt.

Il est également connu (notamment par le brevet FR914284) de réaliser des opérations de déminage en mettant en oeuvre des masses fixées à l'extrémité de câbles entraînés par un tambour rotatif. Le but recherché par ces dispositifs n'est pas de leurrer un capteur acoustique ou sismique mais de provoquer par choc l'explosion de mines enterrées.

Le brevet US4006795 propose, dans un domaine technique totalement différent de celui du déminage, un dispositif pour la prospection sismique à partir d'un navire. Ce dispositif met en oeuvre un tambour portant des masselottes qui viennent frapper une enclume qui transmet les chocs ainsi produits à la coque du navire. Les masselottes ont une répartition irrégulière autour du tambour de façon à assurer la génération d'un signal sismique aléatoire. Un tel caractère aléatoire est nécessaire pour la mise en oeuvre des procédés de prospection sous marine et ne convient pas à une application de déminage terrestre.

C'est le but de l'invention que de proposer un dispositif générateur de signaux acoustiques et sismiques ne présentant pas de tels inconvénients.

Ainsi le dispositif proposé par l'invention permet d'une façon simple la génération de signaux sismiques composés de plusieurs fréquences qui sont facilement modifiables. Il permet donc de simuler facilement la signature sismique d'un véhicule réel.

Le dispositif selon l'invention permet également de fournir un signal sismique d'une puissance importante et dont la fréquence ne dépend pas de la vitesse de déplacement du véhicule qui le porte.

Ainsi l'invention a pour objet un dispositif générateur de signaux acoustiques et sismiques destinés au leurrage de mines équipées de capteurs acoustiques et/ou sismiques, dispositif caractérisé en ce qu'il comprend au moins un tambour entraîné en rotation par des moyens moteurs, tambour sur lequel est attachée au moins une masselotte par l'intermédiaire d'un moyen de fixation positionnant la masselotte à distance du tambour, la masselotte étant destinée lors de la rotation du tambour à frapper le sol périodiquement de façon à engendrer un signal acoustique et sismique de période égale à la période de frappe de la masselotte.

Suivant un premier mode de réalisation, le générateur comprend au moins un premier groupe de masselottes, attachées au tambour avec une répartition régulière déterminant un premier écart angulaire entre deux masselottes voisines du premier groupe tel que ce premier groupe engendre en frappant le sol un signal acoustique et sismique ayant une première fréquence.

Suivant un deuxième mode de réalisation, le générateur comprend au moins un deuxième groupe de masselottes, attachées au tambour avec une répartition déterminant un deuxième écart angulaire entre deux masselottes voisines du deuxième groupe et/ou entre une première masselotte du premier groupe et une première masselotte appartenant au deuxième groupe, deuxième écart tel qu'il en résulte, lorsque les masselottes frappent le sol, un signal acoustique et sismique ayant une deuxième fréquence.

Le tambour comportera de préférence sur sa surface externe des rainures régulièrement espacées angulairement et permettant la solidarisation des moyens de fixation des masselottes suivant des répartitions angulaires différentes.

Le moyen de fixation de la masselotte pourra comporter au moins un dispositif de solidarisation coopérant avec une des rainures du tambour ainsi qu'au moins un bras à l'extrémité duquel sera fixée la masselotte.

Selon diverses variantes : le bras pourra comprendre au moins une chaîne ou au moins deux barres articulées, la ou les masselottes pourront porter au moins un galet rotatif, le générateur de signaux pourra comporter au moins deux masselottes de masses différentes.

L'invention a également pour objet un procédé de génération d'un signal sismique et acoustique destiné au leurrage de mines équipées de capteurs acoustiques et/ou sismiques, signal comprenant au moins une fréquence et engendré au moyen de plusieurs masselottes frappant le sol, ce procédé est caractérisé en ce que:
- on rend les masselottes solidaires d'un tambour par l'intermédiaire de moyens de fixation positionnant les masselottes à distance du tambour et en leur donnant une répartition angulaire sur le tambour qui est telle qu'il y ait au moins un premier groupe de masselottes déterminant un premier écart angulaire entre deux masselottes voisines,
- on entraîne par des moyens moteurs le tambour en rotation au voisinage du sol et à une vitesse de rotation telle que le choc périodique des masselottes sur le sol entraîne la génération du signal souhaité.

Avantageusement ce procédé pourra être adapté à la génération d'un signal comprenant au moins deux fréquences différentes, dans ce cas :
- on rend les masselottes solidaires d'un tambour par l'intermédiaire de moyens de fixation positionnant les masselottes à distance du tambour et en leur donnant une répartition angulaire telle qu'il y ait au moins deux groupes de masselottes déterminant sur le tambour au moins deux écarts angulaires différents,
- on entraîne par des moyens moteurs le tambour en rotation au voisinage du sol et à une vitesse de rotation telle que le choc périodique des masselottes sur le sol entraîne la génération du signal souhaité.

Le procédé selon l'invention comprendra avantageusement dans un premier temps les étapes suivantes :
- analyse en fréquence du signal sismique que l'on cherche à simuler,
- détermination d'au moins deux fréquences principales du signal ainsi que des énergies à associer à ces fréquences,
- choix d'une répartition des masselottes tant en masse qu'en localisation sur le tambour pour que celui ci puisse engendrer un tel signal,
- fixation des masselottes sur le tambour par l'intermédiaire des moyens de fixation et avec la répartition angulaire souhaitée.

On pourra dans un deuxième temps choisir la vitesse de rotation optimale pour le tambour, puis entraîner en rotation le tambour au voisinage du sol et à une vitesse de rotation telle que le choc périodique des masselottes sur le sol entraîne la génération du signal souhaité.

D'autres avantages de l'invention apparaîtront à la lecture de la description qui va suivre de différents modes de réalisation, description faite en référence aux dessins annexés et dans lesquels :
- la figure 1 représente en perspective un dispositif selon un premier mode de réalisation de l'invention,
- la figure 2 est une vue latérale plus détaillée du tambour utilisé dans ce premier mode de réalisation,
- les figures 3a et 3b sont des vues de détail montrant un dispositif de solidarisation du moyen de fixation de la masselotte, la figure 3b étant une coupe partielle suivant le plan repéré AA sur la figure 3a,
- les figures 4a et 4b sont des vues latérales schématiques du tambour montrant deux répartitions différentes des masselottes,
- les figures 5, 6, 7a et 7b montrent différents modes de réalisation possibles pour la masselotte et son moyen de fixation, la figure 7b étant une vue de détail d'un galet de la masselotte suivant la figure 7a.

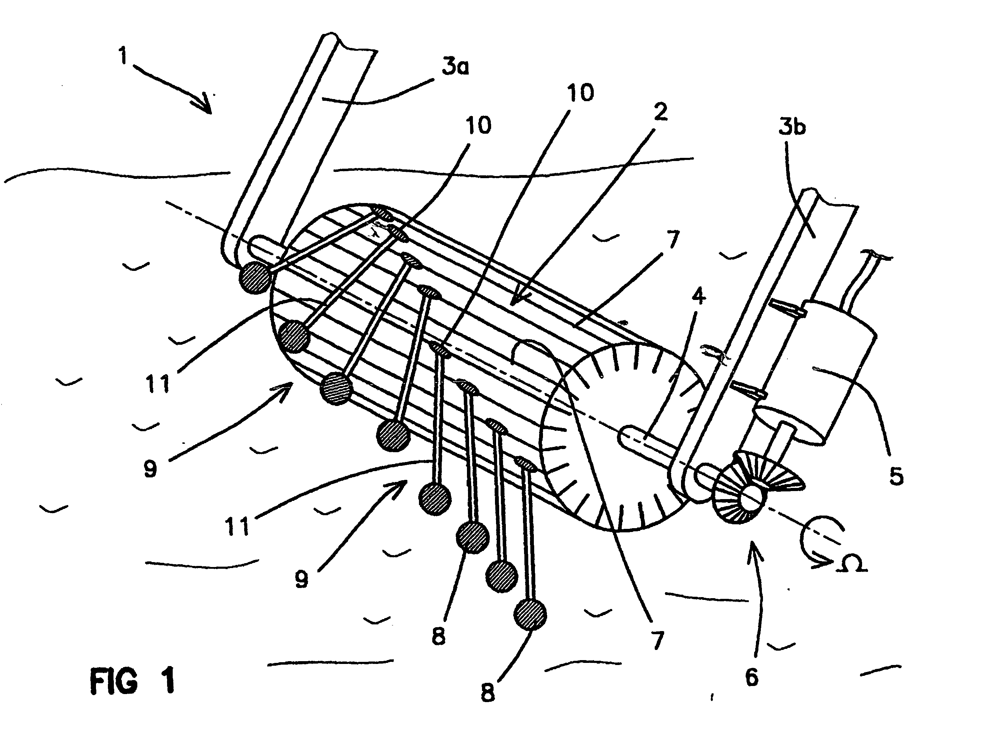

En se reportant à la figure 1, un dispositif générateur de signaux acoustiques et sismiques 1 selon l'invention comprend un tambour 2 qui est monté rotatif entre deux bras 3a,3b. Les bras sont reliés à un véhicule (non représenté).

Le tambour 2 comporte un axe 4 qui est entraîné en rotation avec une vitesse Ω par un moteur 5 et par l'intermédiaire d'un système de transmission 6. Le moteur sera par exemple un moteur électrique alimenté par une source d'énergie non représentée.

Le tambour 2 présente sur sa surface cylindrique externe des rainures longitudinales 7 qui permettent la fixation de masselottes 8 par l'intermédiaire de moyens de fixation 9.

Chaque moyen de fixation 9 de la masselotte comporte ici un dispositif de solidarisation 10 qui coopère avec une rainure 7 du tambour 2 ainsi qu'un bras rigide 11 à l'extrémité duquel est fixée la masselotte 8.

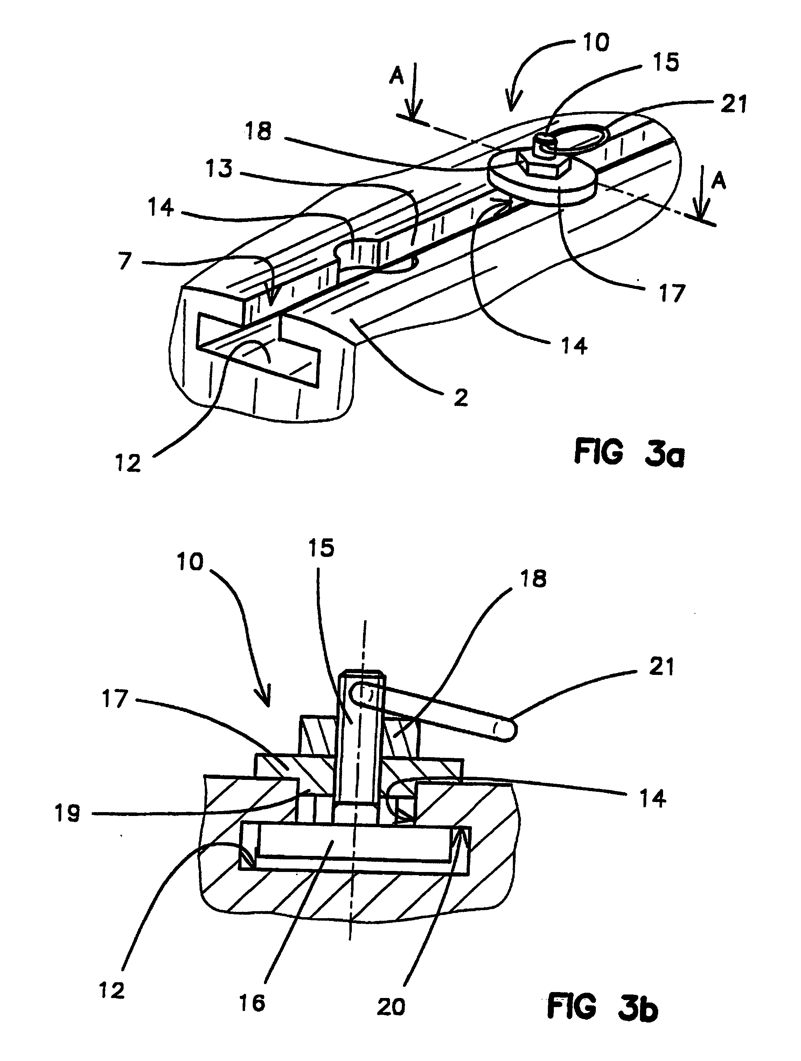

Un exemple de réalisation d'un moyen de solidarisation 10 est représenté en détails aux figures 3a et 3b.

Les rainures 7 ont un profil en « T » débouchant qui s'étend sur toute la longueur du tambour et qui comprend un fond de rainure 12 large relié à la surface extérieure du tambour par un entrefer 13 étroit. Des encoches 14 cylindriques sont aménagées à intervalles réguliers le long de la rainure 7 et permettent de positionner longitudinalement un dispositif de solidarisation 10 par rapport au tambour 2.

Un dispositif de solidarisation 10 comprend une tige 15 dotée d'une tête élargie 16, ayant un diamètre supérieur à la largeur de l'entrefer 13, et qui vient se positionner dans le fond 12 de la rainure. La tige 15 est filetée et reçoit une rondelle 17 qui présente un téton cylindrique 19 coopérant avec l'encoche 14 de façon à immobiliser le dispositif 10 longitudinalement par rapport à la rainure 7. La rondelle 17 comporte un alésage lisse recevant la tige 15, un écrou 18 se visse sur la tige 15 et vient appliquer, d'une part la rondelle 17 contre le tambour 2, et d'autre part la tête 16 de la tige contre une surface supérieure 20 du fond 12 de la rainure 7, bloquant ainsi le dispositif 10 par rapport au tambour 2.

La liaison entre le dispositif de solidarisation 10 et le bras 11 est assurée par une articulation 21, ici un anneau fendu passant dans un trou de la tige 15, anneau équipé d'un système d'ouverture ou d'agrafage rapide. De tels anneaux sont connus, notamment dans le domaine des équipements de voile ou d'alpinisme et ne seront pas décrit plus en détails.

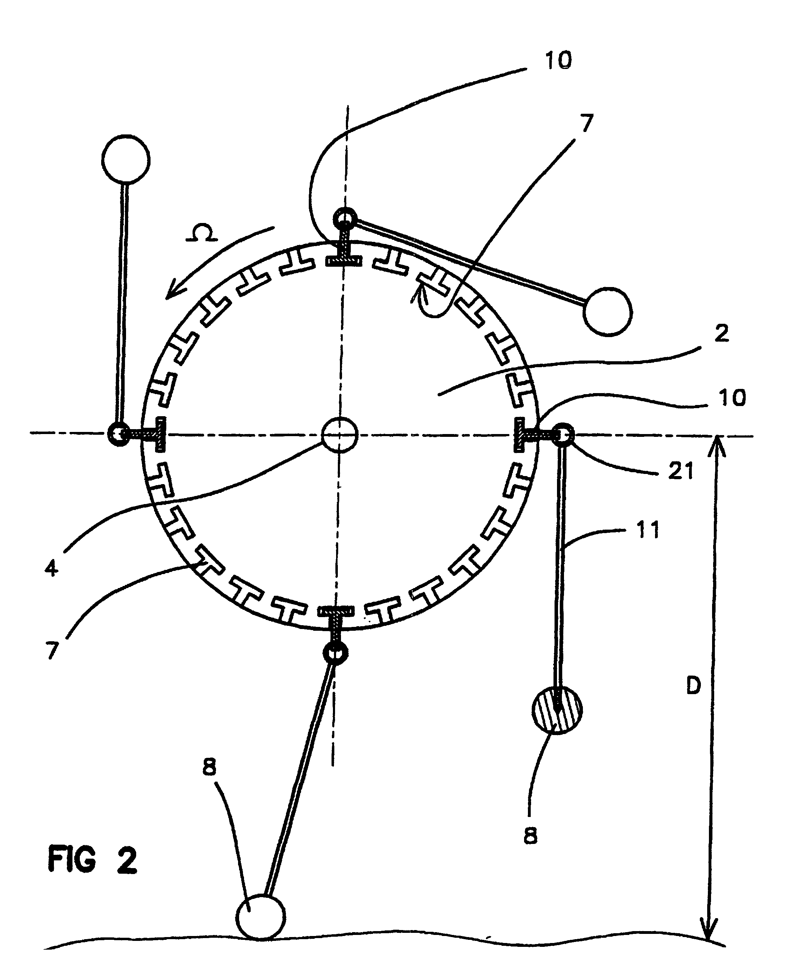

La figure 2 montre le tambour 2 en vue latérale. Le tambour est représenté ici équipé de quatre masselottes 8 seulement. Les masselottes 8 sont régulièrement réparties angulairement et leurs dispositifs de solidarisation 10 se trouvent donc espacés de 90° les uns des autres.

Chaque masselotte est constituée ici par une sphère de 50 à 70 mm de diamètre réalisée par exemple en acier. Elle porte un taraudage qui permet sa fixation sur un filetage porté par le bras 11. La masse de la masselotte est de l'ordre de 0,5 à 1 kg.

L'axe 4 du tambour est positionné par les bras 3a, 3b à une distance D du sol telle que, lors de la rotation du tambour 2, les masselottes 8 viennent frapper le sol périodiquement.

Il résulte de ces chocs des masselottes sur le sol la génération d'un signal acoustique et sismique de période égale à la période de frappe de la masselotte.

Avec un tambour entraîné par le moteur 5 à la vitesse de rotation Ω (exprimée en tours / seconde), la fréquence du signal engendré est ici de f = 4 x Ω.

On voit qu'il est possible de faire varier la fréquence de ce signal en modifiant la vitesse Ω, ou bien, à vitesse de rotation constante, en modifiant le nombre et la répartition angulaire des masselottes sur le tambour 2.

On cherchera dans tous les cas à donner une répartition des masselottes assurant un équilibrage statique et dynamique du tambour de façon à éviter les phénomènes de balourd.

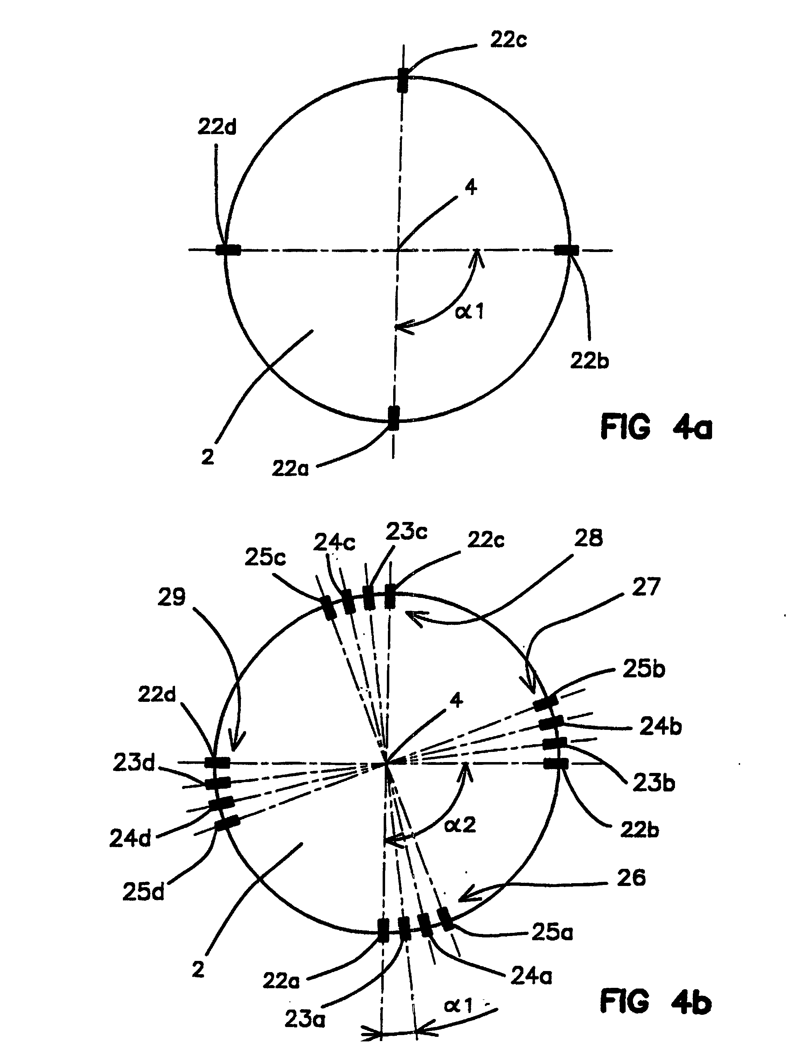

Les figures 4a et 4b montrent ainsi schématiquement deux répartitions différentes des masselottes.

La figure 4a montre une répartition analogue à celle de la figure 2.

Un premier groupe comprend quatre masselottes dont seules les localisations 22a,22b,22c et 22d des points de fixation sur le tambour 2 sont représentées pour la clarté de la figure.

La répartition de ces points de fixation est régulière et détermine un premier écart angulaire α1 (α1=90°) entre deux masselottes voisines.

Ce premier groupe de masselottes engendrera en frappant le sol un signal acoustique et sismique ayant une première fréquence f1 = 4 x Ω (avec Ω en tours/seconde).

La figure 4b montre une autre répartition des masselottes dans laquelle quatre groupes de quatre masselottes sont prévus.

Un premier groupe 26 est formé de quatre masselottes (22a,23a,24a et 25a) et il détermine un écart angulaire α1=9° entre chaques masselottes voisines.

Un deuxième groupe 27 est lui aussi formé de quatre masselottes (22b,23b,24b et 25b) écartées les unes des autres de 9°.

D'une façon analogue le troisième groupe 28 (masselottes 22c,23c,24c et 25c) et le quatrième groupe 29 (masselottes 22d,23d,24d et 25d) sont formés de masselottes écartées les unes des autres de 9°.

La répartition d'ensemble des masselottes sur le tambour présente une symétrie de rotation d'ordre quatre autour de l'axe 4 du tambour 2.

En d'autres termes le deuxième groupe 27 de masselottes détermine avec le premier groupe un écart angulaire α2=90°. L'angle de 90° se trouve ainsi respectivement entre les masselottes 22a et 22b, 23a et 23b, 24a et 24b, 25a et 25b.

Cet écart de 90° se trouve également entre le deuxième groupe 27 et le troisième groupe 28 ainsi qu'entre ce dernier et le quatrième groupe 29.

Lorsque le tambour suivant la figure 4b tourne, le premier groupe 26 de masselottes engendre en frappant le sol un signal acoustique et sismique ayant une première fréquence f1 = 40 x Ω (avec Ω en tours/seconde).

Cette première fréquence est également engendrée par le choc sur le sol de chacun des autres groupes, l'écart angulaire α1 = 9° étant le même à l'intérieur de chacun des groupes.

Les chocs successifs des quatre groupes écartés de α2=90° engendre également, et en superposition au premier signal, un deuxième signal de fréquence f2 = 4 x Ω.

On voit donc que par un choix approprié de la répartition des masselottes sur le tambour il est possible d'engendrer un signal complexe composé de plusieurs fréquences.

Plus généralement un groupe de masselottes séparées d'un angle α engendre un signal de fréquence f= Ω x 2π/α (avec Ω en radians/seconde et a en radians).

A titre de variante il serait ainsi possible de prévoir un écart α3 entre chacune des masselottes du deuxième groupe et du quatrième groupe. Il en résulterait une superposition d'une troisième fréquence à celles engendrées par les répartitions α1 et α2.

On pourra également jouer sur la vitesse de rotation du tambour pour modifier ou moduler les fréquences engendrées.

On pourra donner aux différentes masselottes des poids différents ce qui permettra de moduler les signaux en amplitude. En effet, plus la masselotte a une masse importante plus l'énergie émise dans la bande de fréquence à laquelle elle participe est importante.

A titre d'exemple pour la figure 4b on pourra donner aux masselottes 22a,22b,22c et 22d une masse deux fois supérieure à celle des autres. L'énergie associée au signal de fréquence f2 = 4 x Ω sera alors le double de celle associée au signal de fréquence f1 = 40 x Ω.

On voit donc qu'il est facile avec le dispositif selon l'invention d'engendrer un signal sismique ayant des caractéristiques d'amplitudes et fréquences données.

On procédera tout d'abord à une analyse en fréquence du signal sismique que l'on cherche à simuler.

Cette analyse sera conduite par exemple avec un analyseur temps/fréquences relié à un géophone. Elle permettra de déterminer les 2 à 4 fréquences principales du signal qu'il convient de reproduire ainsi que les énergies à associer à ces fréquences.

On choisira ensuite la répartition des masselottes tant en masse qu'en localisation sur le tambour pour que celui ci puisse engendrer un tel signal et on déterminera la vitesse de rotation optimale pour le tambour.

On rendra ensuite les masselottes solidaires du tambour par l'intermédiaire des moyens de fixation et avec la répartition angulaire souhaitée.

On entraînera enfin par les moyens moteurs le tambour en rotation au voisinage du sol et à une vitesse de rotation telle que le choc périodique des masselottes sur le sol entraîne la génération du signal souhaité.

Grâce à l'invention il est facile de modifier la forme du signal puisqu'il suffit de modifier la répartition des masselottes sur le tambour. Il n'est donc pas nécessaire de changer le système complet.

Le signal obtenu a une puissance relativement importante avec un encombrement réduit et il présente un bon rendement entre la puissance mécanique fournie et la puissance acoustique et sismique émise.

Il y a peu de bruit parasite résiduel. De plus la vitesse de rotation du tambour est indépendante de la vitesse de déplacement du véhicule qui le porte. La vitesse de rotation du tambour sera choisie en fonction des fréquences des signaux à engendrer. Elle sera de l'ordre de quelques tours par seconde (3 à 5 tours/s).

Il est possible de donner aux masselottes 8 et aux bras 11 différentes formes sans sortir du cadre de l'invention.

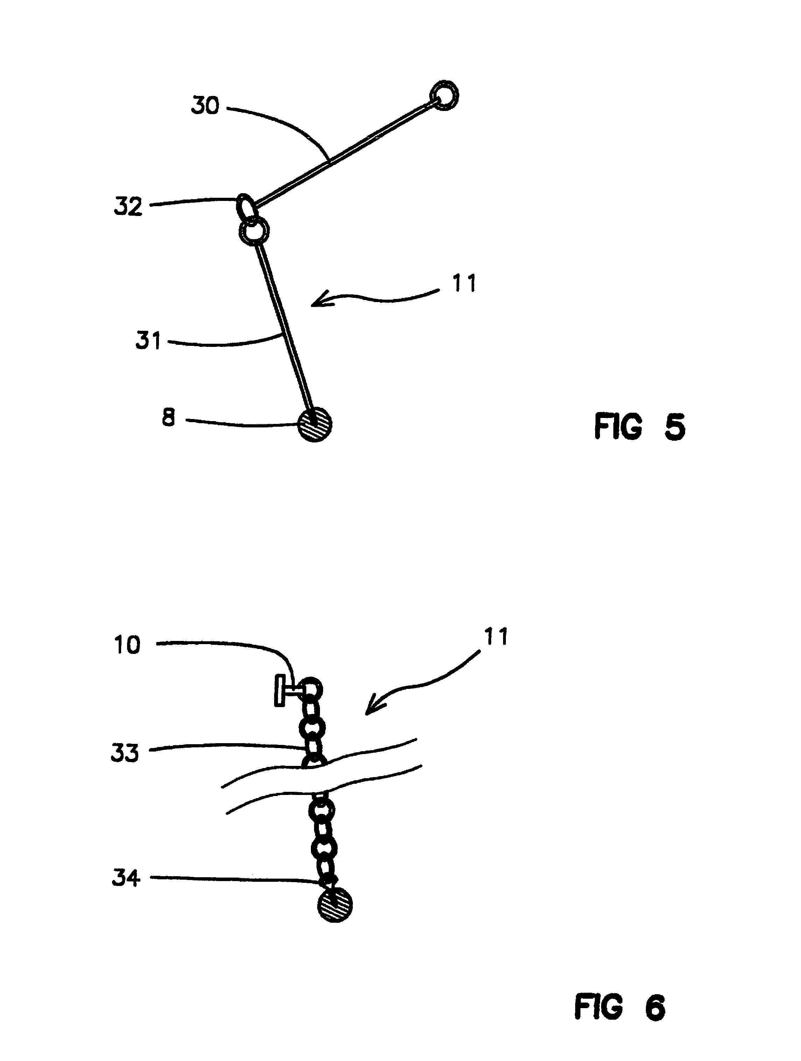

La figure 5 montre ainsi un bras 11 réalisé sous la forme d'un fléau comportant deux tiges 30 et 31 reliées par une articulation 32. Ce mode de réalisation permet d'augmenter la souplesse de la liaison ce qui est utile sur des terrains accidentés.

La figure 6 montre un bras 11 constitué par une chaîne souple 33 dont le maillon supérieur est fixé au dispositif de solidarisation 10 et dont le maillon inférieur est lié à une vis 34 solidaire de la masselotte 8. Ce mode de réalisation permet d'accroître encore plus la souplesse de la liaison.

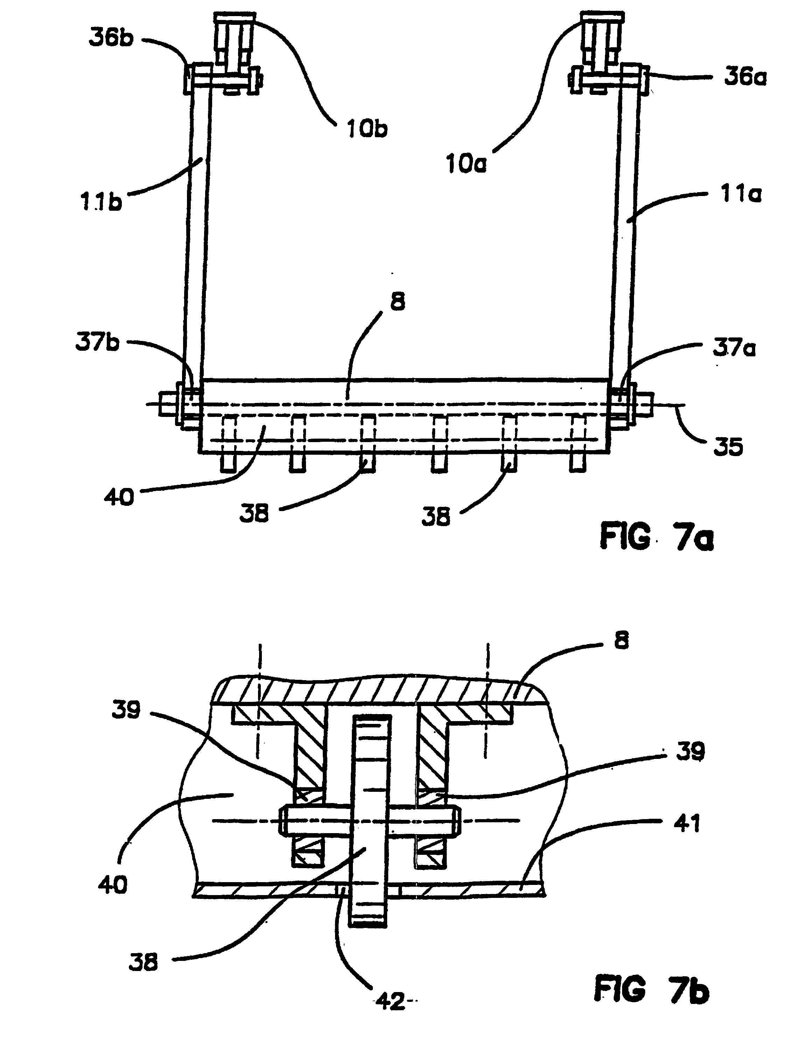

La figure 7a montre une masselotte 8 qui a sensiblement la forme d'un cylindre allongé d'axe 35 parallèle à celui du tambour 2 et qui est lié à ce dernier par deux bras 11a, 11b.

Chaque bras porte une articulation supérieure 36a, 36b (par exemple une tige) qui le lie à un dispositif 10a,10b de fixation sur le tambour.

Chaque bras s'articule également à son extrémité inférieure sur des axes 37a,37b solidaires de la masselotte 8.

Suivant ce mode particulier de réalisation, la masselotte porte des galets 38 qui sont montés rotatifs sur des paliers 39 solidaires de la masselotte 8.

Afin de permettre le montage des galets, la masselotte présente donc une cavité interne 40 qui est fermée par un couvercle 41 présentant des fentes 42 laissant dépasser les galets 38.

Ce mode de réalisation permet de répartir le choc sur une plus grande surface donc de réduire la pression au sol, ce qui peut permettre de ne pas déclencher les mines à pression.

Il est plus particulièrement adapté à la réalisation de signaux sismiques sur une surface dure, telle une route.

Il est ainsi possible également d'associer une masselotte de masse relativement importante sans pénaliser le rendement énergétique du système, les galets permettant d'éviter le frottement de contact avec le sol.

## Revendications

1. Dispositif (1) générateur de signaux acoustiques et sismiques destinés au leurrage de mines équipées de capteurs acoustiques et/ou sismiques, dispositif ***caractérisé en ce qu'****il* comprend au moins un tambour (2) entraîné en rotation par des moyens moteurs (5), tambour sur lequel est attachée au moins une masselotte (8) par l'intermédiaire d'un moyen de fixation (9) positionnant la masselotte à distance du tambour (2), la masselotte étant destinée lors de la rotation du tambour à frapper le sol périodiquement de façon à engendrer un signal acoustique et sismique de période égale à la période de frappe de la masselotte (8).

2. Dispositif générateur de signaux selon la revendication 1, **caractérisé en ce qu'**il comprend au moins un premier groupe (26) de masselottes (8), attachées au tambour (2) avec une répartition régulière déterminant un premier écart angulaire (α1) entre deux masselottes voisines du premier groupe tel que ce premier groupe engendre en frappant le sol un signal acoustique et sismique ayant une première fréquence (f1).

3. Dispositif générateur de signaux selon la revendication 2, **caractérisé en ce qu'**il comprend au moins un deuxième groupe. (27) de masselottes (8), attachées au tambour avec une répartition déterminant un deuxième écart angulaire (α2) entre deux masselottes voisines du deuxième groupe et/ou entre une première masselotte du premier groupe et une première masselotte appartenant au deuxième groupe, deuxième écart tel qu'il en résulte, lorsque les masselottes (8) frappent le sol, un signal acoustique et sismique ayant une deuxième fréquence (f2).

4. Dispositif générateur de signaux selon une des revendications 1 à 3, **caractérisé en ce que** le tambour (2) comporte sur sa surface externe des rainures (7) régulièrement espacées angulairement et permettant la solidarisation des moyens de fixation (9) des masselottes (8) suivant des répartitions angulaires différentes.

5. Dispositif générateur de signaux selon la revendication 4, **caractérisé en ce que** le moyen de fixation (9) d'une masselotte comporte au moins un dispositif de solidarisation (10) coopérant avec une des rainures (7) du tambour (2) ainsi qu'au moins un bras (11) à l'extrémité duquel est fixée la masselotte.

6. Dispositif générateur de signaux selon la revendication 5, **caractérisé en ce que** le bras comprend au moins une chaîne (33).

7. Dispositif générateur de signaux selon la revendication 5, **caractérisé en ce que** le bras (11) comprend au moins deux barres (30,31) articulées.

8. Dispositif générateur de signaux selon la revendication 7, **caractérisé en ce que** la ou les masselottes (8) portent au moins un galet rotatif (38).

9. Dispositif générateur de signaux selon une des revendications 1 à 8, **caractérisé en ce qu'**il comporte au moins deux masselottes (8) de masses différentes.

10. Procédé de génération d'un signal sismique et acoustique destiné au leurrage de mines équipées de capteurs acoustiques et/ou sismiques, signal comprenant au moins une fréquence et engendré au moyen de plusieurs masselottes frappant le sol, **caractérisé en ce que** :
- on rend les masselottes solidaires d'un tambour par l'intermédiaire de moyens de fixation positionnant les masselottes à distance du tambour et en leur donnant une répartition angulaire sur le tambour qui est telle qu'il y ait au moins un premier groupe de masselottes déterminant un premier écart angulaire entre deux masselottes voisines,
- on entraîne par des moyens moteurs le tambour en rotation au voisinage du sol et à une vitesse de rotation telle que le choc périodique des masselottes sur le sol entraîne la génération du signal souhaité.

11. Procédé de génération d'un signal sismique et acoustique selon la revendication 10, et adapté à la génération d'un signal comprenant au moins deux fréquences différentes, **caractérisé en ce que**:
- on rend les masselottes solidaires d'un tambour par l'intermédiaire de moyens de fixation positionnant les masselottes à distance du tambour et en leur donnant une répartition angulaire telle qu'il y ait au moins deux groupes de masselottes déterminant sur le tambour au moins deux écarts angulaires différents,
- on entraîne par des moyens moteurs le tambour en rotation au voisinage du sol et à une vitesse de rotation telle que le choc périodique des masselottes sur le sol entraîne la génération du signal souhaité.

12. Procédé de génération d'un signal sismique et acoustique destiné au leurrage de mines équipées de capteurs acoustiques et/ou sismiques, signal engendré au moyen de plusieurs masselottes rendues solidaires d'un tambour rotatif par des moyens de fixation, procédé **caractérisé en ce qu'**il comprend les étapes suivantes :
- analyse en fréquence du signal sismique que l'on cherche à simuler,
- détermination d'au moins deux fréquences principales du signal ainsi que des énergies à associer à ces fréquences,
- choix d'une répartition des masselottes tant en masse qu'en localisation sur le tambour pour que celui ci puisse engendrer un tel signal,
- fixation des masselottes sur le tambour par l'intermédiaire des moyens de fixation et avec la répartition angulaire souhaitée.

13. Procédé de génération d'un signal sismique et acoustique selon la revendication 12, **caractérisé en ce qu'**il comprend les étapes suivantes :
- choix de la vitesse de rotation optimale pour le tambour,
- entraînement en rotation du tambour au voisinage du sol et à une vitesse de rotation telle que le choc périodique des masselottes sur le sol entraîne la génération du signal souhaité.

## Patentansprüche

1. Vorrichtung (1) zum Erzeugen von akustischen und seismischen Signalen, die zum Ködern von Minen, die mit akustischen und/oder seismischen Sensoren ausgerüstet sind, vorgesehen sind, wobei die Vorrichtung ***dadurch gekennzeichnet ist*, *dass*** sie wenigstens eine durch Antriebsmittel (5) drehbar angetriebene Trommel (2) umfasst, wobei an der Trommel wenigstens ein Fliehgewicht (8) mit Hilfe eines Befestigungsmittels (9), das das Fliehgewicht von der Trommel (2) beabstandet anordnet, befestigt ist, wobei das Fliehgewicht dafür vorgesehen ist, bei der Drehung der Trommel periodisch so auf den Boden zu schlagen, dass ein akustisches und seismisches Signal mit einer Periode, die gleich der Periode der Schlagperiode des Fliehgewichtes (8) ist, erzeugen wird.

2. Vorrichtung zum Erzeugen von Signalen nach Anspruch 1, **dadurch gekennzeichnet, dass** sie wenigstens eine erste Gruppe (26) von Fliehgewichten (8) umfasst, die in einer regelmäßigen Verteilung an der Trommel (2) befestigt sind, welche einen ersten Verschiebungswinkel (α1) zwischen zwei benachbarten Fliehgewichten der ersten Gruppe so festlegt, dass diese erste Gruppe, indem sie auf den Boden schlägt, ein akustisches und seismisches Signal mit einer ersten Frequenz (f1) erzeugt.

3. Vorrichtung zum Erzeugen von Signalen nach Anspruch 2, **dadurch gekennzeichnet, dass** sie wenigstens eine zweite Gruppe (27) von Fliehgewichten (8) umfasst, die in einer Verteilung an der Trommel befestigt sind, welche einen zweiten Verschiebungswinkel (α2) zwischen zwei benachbarten Fliehgewichten der zweiten Gruppe und/oder zwischen einem ersten Fliehgewicht der ersten Gruppe und einem ersten der zweiten Gruppe zugehörigen Fliehgewicht festlegt, wobei die zweite Verschiebung so ist, dass, wenn die Fliehgewichte (8) auf den Boden schlagen, daraus ein akustisches und seismisches Signal mit einer zweiten Frequenz (f2) resultiert.

4. Vorrichtung zum Erzeugen von Signalen nach einem der Ansprüche 1 bis 3, **dadurch gekennzeichnet, dass** die Trommel (2) an ihrer Außenfläche Nuten (7) umfasst, die gleichmäßig winkelmäßig beabstandet sind und den Zusammenschluss der Befestigungsmittel (9) der Fliegewichte (8) gemäß der unterschiedlichen winkelmäßigen Verteilung ermöglichen.

5. Vorrichtung zum Erzeugen von Signalen nach Anspruch 4, **dadurch gekennzeichnet, dass** die Befestigungsmittel (9) des Fliegewichtes wenigstens eine Vorrichtung (10) zum Zusammenschluss, die mit einer der Nuten (7) der Trommel (2) zusammenwirkt, sowie wenigstens einen Arm (11), an dessen Ende das Fliegewicht befestigt ist, umfasst.

6. Vorrichtung zum Erzeugen von Signalen nach Anspruch 5, **dadurch gekennzeichnet, dass** der Arm wenigstens eine Kette (33) umfasst.

7. Vorrichtung zum Erzeugen von Signalen nach Anspruch 5, **dadurch gekennzeichnet, dass** der Arm (11) wenigstens zwei gelenkige Stangen (30, 31) umfasst.

8. Vorrichtung zum Erzeugen von Signalen nach Anspruch 7, **dadurch gekennzeichnet, dass** das oder die Fliehgewichte (8) wenigstens eine Walze (38) trägt oder tragen.

9. Vorrichtung zum Erzeugen von Signalen nach einem der Ansprüche 1 bis 8, **dadurch gekennzeichnet, dass** sie wenigstens zwei Fliehgewichte (8) mit unterschiedlicher Masse umfasst.

10. Verfahren zur Erzeugung eines seismischen und akustischen Signals, das zum Ködern von Minen vorgesehen ist, die mit akustischen und/oder seismischen Sensoren ausgerüstet sind, wobei das Signal wenigstens eine Frequenz umfasst und mit Hilfe von mehreren auf den Boden schlagenden Fliehgewichten erzeugt wird, wobei das Verfahren **dadurch gekennzeichnet ist, dass**:
- die Fliehgewichte mit Hilfe von Befestigungsmitteln fest mit einer Trommel verbunden werden, die die Fliehgewichte von der Trommel beabstandet anordnen und sie winkelmäßig über die Trommel so verteilen, dass es wenigstens eine erste Gruppe von Fliehgewichten gibt, die einen ersten Verschiebungswinkel zwischen zwei benachbarten Fliehgewichten festlegt,
- durch Antriebsmittel die Trommel in der Nähe des Bodens mit einer derartigen Drehgeschwindigkeit in Drehung versetzt wird, dass der periodische Schlag der Fliehgewichte auf den Boden die Erzeugung des gewünschten Signals nach sich zieht.

11. Verfahren zur Erzeugung eines seismischen und akustischen Signals nach Anspruch 10 und an die Erzeugung eines Signals angepasst, das wenigstens zwei verschiedene Frequenzen umfasst, **dadurch gekennzeichnet, dass**:
- die Fliehgewichte mit Hilfe von Befestigungsmitteln fest mit einer Trommel verbunden werden, die die Fliehgewichte von der Trommel beabstandet anordnen und sie winkelmäßig so verteilen, dass es wenigstens zwei Gruppen von Fliehgewichten gibt, die wenigstens zwei verschiedene Verschiebungswinkel über die Trommel festlegen,
- durch Antriebsmittel die Trommel in der Nähe des Bodens mit einer derartigen Drehgeschwindigkeit in Drehung versetzt wird, dass der periodische Schlag der Fliehgewichte auf den Boden die Erzeugung des gewünschten Signals nach sich zieht.

12. Verfahren zur Erzeugung eines seismischen und akustischen Signals, das zum Ködern von Minen vorgesehen ist, die mit akustischen und/oder seismischen Sensoren ausgerüstet sind, wobei das Signal mit Hilfe von mehreren Fliehgewichten erzeugt wird, die mit Hilfe von Befestigungsmitteln fest mit einer drehbare Trommel verbunden werden, wobei das Verfahren **dadurch gekennzeichnet ist, dass** es die folgenden Schritte umfasst:
- Analyse der Frequenz des seismischen Signals, das zu simulieren versucht wird,
- Festlegung wenigstens zweier Hauptfrequenzen des Signals sowie der an diese Frequenzen geknüpften Energien,
- Wahl einer Verteilung der Fliehgewichte sowohl bei der Masse als auch bei der Ortsfestlegung auf der Trommel, damit diese ein derartiges Signal erzeugen kann,
- Befestigung der Fliegewichte an der Trommel mit Hilfe von Befestigungsmitteln mit der gewünschten winkelmäßigen Verteilung.

13. Verfahren zur Erzeugung eines seismischen und akustischen Signals nach Anspruch 12, **dadurch gekennzeichnet, dass** es die folgenden Schritte umfasst:
- Wahl der optimale Drehgeschwindigkeit für die Trommel,
- Versetzung der Trommel in der Nähe des Bodens mit einer derartigen Drehgeschwindigkeit in Drehung, dass der periodische Schlag der Fliehgewichte auf den Boden die Erzeugung des gewünschten Signals nach sich zieht.

## Claims

1. Device (1) for generating acoustic and seismic signals intended to decoy mines equipped with acoustic and/or seismic sensors, device ***characterized in that*** it comprises at least one drum (2) driven in rotation by driving means (5), drum on which at least one bob weight (8) attached to the drum by a fastening means (9) that positions the weight at a distance from the drum (2), the bob weight being intended to strike the ground periodically as the drum rotates, in order to generate an acoustic and seismic signal whose period is the same as the striking period of the bob weight (8).

2. Device for generating signals according to claim 1, **characterized in that** it comprises at least a first group (26) of bob weights (8) attached to the drum (2) with a regular distribution producing a first angular distance (α1) between two adjacent bob weights of the first group, such as the first group generates by striking the ground an acoustic and seismic signal with a first frequency (f1).

3. Device for generating signals according to claim 2, **characterized in that** it comprises at least one second group (27) of bob weights (8) attached to the drum with a regular distribution producing a second angular distance (α2) between two adjacent bob weights of the second group and/or between a first bob weight of the first group and a first bob weight belonging to the second group, second distance being such that when the second group of bob weights (8) strike the ground an acoustic and seismic signal with a second frequency (f2) is produced.

4. Device for generating signals according to one of claims 1 to 3, **characterized in that** the drum (2) comprises grooves (7) with regular angular spacing on its outer surface allowing the connection of the fastening means (9) of the bob weights (8) according to different angular distributions.

5. Device for generating signals according to claim 4, **characterized in that** the fastening means (9) of a bob weight has at least one connection device (10) cooperating with one of the grooves (7) of the drum (2) and at least one arm (11) at the end of which the at least one weight is attached.

6. Device for generating signals according to claim 5, **characterized in that** the arm has at least one chain (33).

7. Device for generating signals according to claim 5, **characterized in that** the arm (11) has at least two articulated bars (30, 31).

8. Device for generating signals according to claim 7, **characterized in that** the at least one bob weight (8) has at least one rotating wheel (38).

9. Device for generating signals according to one of the claims 1 to 8, **characterized in that** it comprises at least two bob weights (8) with different masses.

10. A process for generating a seismic and acoustic signal intended to decoy mines equipped with acoustic and/or seismic sensors, the signal having at least one frequency and being generated by several bob weight striking the ground, **characterized in that** :
- the bob weight are made integral with a drum through fastening means that position the bob weights at a distance from the drum and are given an angular distribution on the drum such that there is at least a first group of bob weight defining a first angular space between two adjacent bob weight,
- the drum is driven in rotation by driving means in the vicinity of the ground and at a rotation speed such that the periodic impact of the bob weight on the ground generates the desired signal.

11. The process for generating a seismic and acoustic signal according to claim 10, and adapted to the generation of a signal comprising at least two different frequencies, **characterized in that** :
- the bob weights are made integral with a drum through fastening means that position the bob weights at a distance of the drum and are given an angular distribution such that there is at least two groups of bob weights defining on the drum at least two different angular space,
- the drum is driven in rotation by driving means in the vicinity of the ground and at a rotation speed such that the periodic impact of the bob weights on the ground generates the desired signal.

12. The process for generating a seismic and acoustic signal intended to decoy mines equipped with acoustic and /or seismic sensors, such signal being generated by several bob weights made integral with a rotating drum by fastening means **characterized in that** it comprises the following steps :
- analysing a frequency of the seismic signal to be simulated;
- determining at least two main frequencies of the signal and of the energies associated with the at least two main frequencies;
- determining a bob weight distribution in terms of mass and location on the drum so that the latter is able to generate such a signal; and
- fastening the bob weights to the drum by the fixation means and with the determined angular distribution.

13. The process according to claim 12, **characterized in that** it comprises the following steps :
- determining the optimum rotation speed for the drum,
- driving the drum in rotation in the vicinity of the ground at a rotation speed such that the periodic impacts of the bob weights on the ground generate the signal.
